Europäisches Patentamt

European Patent Office

Office européen des brevets

(19)

(11) EP 0 826 310 A1

(12) EUROPEAN PATENT APPLICATION
published in accordance with Art. 158(3) EPC

(43) Date of publication:
04.03.1998 Bulletin 1998/10

(21) Application number: 96913723.1

(22) Date of filing: 10.05.1996

(51) Int. Cl.$^6$: **A23K 1/16**, A23K 1/18

(86) International application number:
PCT/JP96/01242

(87) International publication number:
WO 96/35339 (14.11.1996 Gazette 1996/50)

(84) Designated Contracting States:
DE ES FR GB IT NL

(30) Priority: 12.05.1995 JP 114602/95
02.04.1996 JP 79922/96

(71) Applicant: Ajinomoto Co., Inc.
Tokyo 104 (JP)

(72) Inventors:
• TANIMOTO, Hiroyuki
Ajinomoto Co., Inc.
Food Res.
Kawasaki-shi Kanagawa 210 (JP)
• SATO, Hitoshi
Ajinomoto Co., Inc.
Food Res. &
Kawasaki-shi K-anagawa 210 (JP)
• KARASAWA, Masahiko
Ajinomoto Co., Inc.
Kawasaki
Kanagawa 210 (JP)
• IWASAKI, Kazuya
Itochu Feed Mills Co., Ltd.
Kuroiso-shi Tochigi 325-01 (JP)
• OSHIMA, Akio
Itochu Feed Mills Co., Ltd.
Kuroiso-shi Tochigi 325-01 (JP)
• ADACHI, Sonosuke
Itochu Feed Mills Co., Ltd.
Kuroiso-shi Tochigi 325-01 (JP)

(74) Representative:
Strehl Schübel-Hopf Groening & Partner
Maximilianstrasse 54
80538 München (DE)

(54) **FEED COMPOSITION CONTAINING POLY-$g(g)-GLUTAMIC ACID**

(57) A feed composition for animals (livestock, poultry, fish or pet) which contains poly-γ-glutamic acid (and/or degradated product thereof) and which has an effect of accelerating mineral absorption or increasing egg-shell strength, or reducing body fat content. A method for feeding animals which comprises feeding animals with a feed composition containing poly-γ-glutamic acid.

EP 0 826 310 A1

## Description

TECHNICAL FIELD

The present invention relates to a feed composition which has not only effects of increasing mineral absorption and eggshell strength but also an effect of reducing body fat. More particularly, it relates to a feed composition containing poly-$\gamma$-glutamic acid and/or degradated products thereof.

BACKGROUND ART

Feeds contain proteins, carbohydrates, fats, minerals, and vitamins. In general, defatted soybeans, fish meal, meat bone meal, rapeseed cake and the like are employed as the protein sources; corn, wheat flour and the like as the carbohydrate sources; animal and vegetable fats as fat sources. Among mineral sources, calcium carbonate, calcium phosphate, pulverized shell and the like are employed as the calcium sources; and ferric chloride, ferrous sulfate and the like as the iron sources.

In the livestock industry, attempts have been made to promote the growth of livestock and poultry such as pigs and chickens by feeding feeds having high nutrition efficiency to them for the purpose of their productivity. However, problems of weak legs or deformed legs occur because the bone growth cannot catch up with the increase in the body weight. This cause is considered to be due to low utilization of minerals, especially that of calcium. Also, there is a problem of the low eggshell strength in poultry industry.

Furthermore, large energy intake for promotion of animal growth tends to result in increased body fat content in animals. However, because people have become more health conscious and try to reduce intake of animal fat, it is widely demanded to develop a breeding method or a feed to produce animals with less body fat.

In pet business world, bone diseases such as osteoporosis and osteomalacia are increasing in pet animals due to low utilization of minerals, especially calcium, or due to lack of exercise and lack of irradiation of sunlight.

As means to enhance utilization of minerals, generally the amount of minerals in feed is increased or more absorbable salt is used as a mineral source.

However, excessive feeding of certain mineral causes a problem of lowering utilization of other mineral. For example, a large intake of calcium inhibits the absorption of iron and magnesium (Journal of Japan Nutrition and Food Society 39, 433, 1986). Although an attempt has been made to improve the absorption rate of minerals by converting the form of mineral salt into other soluble one, there is no appreciable difference in the absorption rate, and therefore this is not the fundamental solution for it.

In general, it is essential that minerals are present in the intestinal tract in a soluble state in order to be absorbed. Casein phosphopeptide (CPP) is known as a substance to accelerate mineral absorption in the intestinal tract since it has an ability to enhance solubility of minerals, espcially calcium and iron (Japanese Patent Publication No. HEI 03-58718). A feed containing CPP is also known (Japanese Patent Publication No. HEI 03-71101). However, it is said that CPP may be subjected to dephosphorylation within the intestinal tract with alkaline phosphatase present in the mucous membrane of the small intestine (Japanese Patent Unexamined Publication No. HEI 05-244901) or it may be hydrolyzed with digestive enzymes which are secreted in the digestive tracts, whereby its ability to solubilize minerals in the intestinal tract is lowered. And therefore, effect of CPP supplementation is not consistent.

Although a feed containing CPP and a substance (e.g. oleanolic acid) which is capable of preventing enzymatic dephosphorylation of it in vitro is also known (Japanese Patent Unexamined Publication No. HEI 05-176688), there is no disclosure therein regarding evidence that the enzymatic dephosphorylation of CPP is actually prevented in the intestine by oleanolic acid.

On the other hand, as examples of feed for livestock and poultry which makes body fat content reduced, Japanese Patent Unexamined Publication No. HEI 03-219838 discloses that valine, leucine and isoleucine as amino acid components are blended into a feed at 0.01 ~ 3.00 % by weight, respectively. And, Japanese Patent Publication No. HEI 06-95892 discloses that vitamin $D_3$ is blended or mixed into a feed at 750 ~ 2500 $\mu$g per kg of feed.

There is poly-$\gamma$-glutamic acid, the main component of a viscous substance of femented soybeans called natto in Japan, as a substance which is capable of solubilizing minerals in the intestinal tract and which accelerates absorption of minerals. Poly-$\gamma$-glutamic acid has an ability to solubilize minerals owing to its many carboxyl groups present in the molecules. Furthermore, poly-$\gamma$-glutamic acid is considered to maintain its activity even in the intestinal tract because it is combined with $\gamma$-peptide bond which remains unhydrolyzed with digestive enzymes present in the small intestine. Foods and beverages containing poly-$\gamma$-glutamic acid are known (Japanese Patent Unexamined Publication Nos. HEI 03-30648 and HEI 05-316999). While any feed containing poly-$\gamma$-glutamic acid has not been known yet.

An object of the present invention is to develop a feed composition containing a substance which maintains its ability to solubilize minerals in the intestinal tract and thus accelerates the absorption of minerals therein, whereby effective utilization of minerals is enhanced or eggshell strength is increased.

Another object of the present invention is to develop a feed composition which can reduce the amount of body fat in animals (livestock and poultry), especially abdominal fat.

DISCLOSURE OF INVENTION

The present inventors have investigated in order to achieve the above objects, and found that when poly-γ-glutamic acid is added to a feed composition for animals (e. g. livestock, poultry, pets and the like), the absorption of minearls in the intestinal tract is accelerated and thereby the formations of bone and eggshell are promoted, and further the accumulated amount of body fat is reduced with increased carcass yield of livestock and poultry. The present invention was based on these findings.

That is, the present invention is a feed composition containing poly-γ-glutamic acid as a substance to accelerate mineral adsorption, and further as a substance to reduce body fat.

BRIEF DESCRIPTION OF THE DRAWING

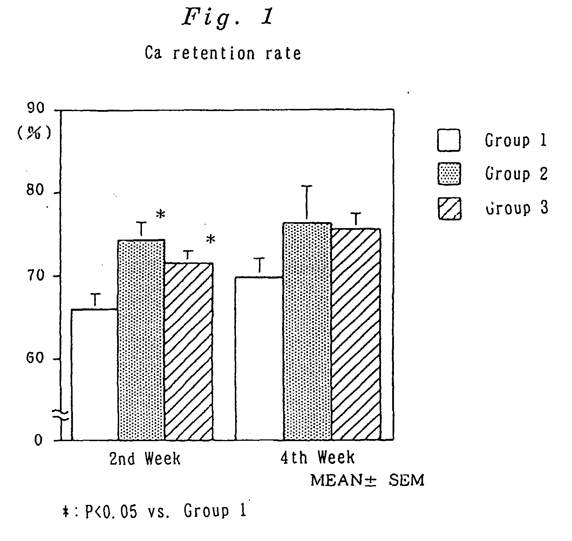

Fig. 1 is a gragh showing calcium retention rate in Example 10.

THE BEST MODE FOR CARRYING OUT THE INVENTION

The poly-γ-glutamic acid to be used in the present invention may be poly-γ-glutamic acid extracted from the viscous substance of natto, or it may be poly-γ-glutamic acid secreted extracellularly from bacteria belonging to the genus Bacillus, such as Bacillus natto, etc. Also, it may be used not only in its purified form but also in partially purified form. Therefore, there is absolutely no problem with including the levan contained in the natto viscous substance secreted extracellularly by Bacillus natto.

As to an average molecular weight of the poly-γ-glutamic acid to be used in the present invention, there is no limitation. Usually, the poly-γ-glutamic acid which may be separated from natto or a fermentated broth of Bacillus natto has an average molecular weight ranging from 1,000 to 3,000,000. Also, the average molecular weight of poly-γ-glutamic acid degradated product lies in the range of from 1,000 to 1,000,000. It is preferable to use poly-γ-glutamic acid having an average molecular weight of 10,000 to 1,000,000.

It is said that poly-γ-glutamic acid is generally a mixture of D- and L-forms and that the ratio of D-form to L-form may be varied depending on the kind of microorganism or the culture composition. For example, poly-γ-glutamic acid disclosed in Japanese Patent Unexamined Publication No. HEI 03-47087 contains more than 90 % of L-form. The poly-γ-glutamic acid which may be used in the present invention is not restricted in the D/L ratio. There may be used poly-γ-glutamic acid in any ratio of D-form to L-form.

For the production of poly-γ-glutamic acid having the desired molecular weight, there is a method whereby the molecular weight of poly-γ-glutamic acid having a molecular weight higher than that desired is lowered by an acid or by bacteria or enzymes derived from organ, which can hydrolyze γ-bonds, and a method whereby poly-γ-glutamic acid having the desired molecular weight is secreted by culturing Bacillus natto, etc. However, there is no difference with using poly-γ-glutamic acid in either way.

Poly-γ-glutamic acid is usually obtained as a sodium salt, but there is no difference with using its other edible salts or the free poly-γ-glutainic acid.

The amount added of poly-γ-glutamic acid ingredient to feeds may be about 0.01 ~ 3 %, by weight, preferably about 0.01 ~ 1 % by weight.

The feed composition of the present invention may be utilized for any animal including livestock (e.g. cattle, pig, horse etc.), poultry (e.g. chicken, turkey, duck, quail, etc.), fishes (e.g. eel, sweetfish (ayu), carp, etc.), pets (dog, cat, tropical fish, etc.).

The other components of the feed composition may be the same as the ordinary feed for the intended animal, and include proteins, carbohydrates, fats, minerals, vitamins and the like. The calcium content in the feed composition may be about 0.01 ~ 30 % by weight, preferably about 0.1 ~ 5 % by weight. The iron content in the feed composition may be about 0.001 ~ 1 % by weight, preferably about 0.005 ~ 0.05 % by weight.

The feed composition of the present invention may be manufactured according to the conventional process, and the poly-γ-glutamic acid may be blended together with other feed components, or blended separately.

The feeding method of the feed composition to the intended animal may also be convnentional.

Example 1

[Preparation of poly-γ-glutamic acid]

Bacillus natto separated from commercially available natto was inoculated into a culture medium (pH 6.0) containing 0.3 % of malt extract, 0.3 % yeast extract, 0.5 % of polypeptone and 1.0 % of glucose and precultured at 32 °C for 24 hours with 3 liters of mini jar. And then, the preculture medium was added in a concentration 0.5 % to a main culture medium (pH 6.4) containing 7.5 % of glucose, 1. 5 % ammonium sulfate, 0.035 % of $MgSO_4 \cdot 7H_2O$, 0.005 % of $MnSO_4 \cdot nH_2O$, 0.15 % of $KH_2PO_4$, 5.0 % of monosodium glutamate and 1.0 % of NaCl and the medium was cultivated at 37 °C for 48 hours with 500 liters of jar.

The obtained culture medium was adjusted to pH 2.0 with concentrated hydrochloric acid, and thereafter was subjected to centrifugation or filter press. To the supernatant thereof was added NaCl so as to become 10 % whereby poly-γ-glutamic acid precipitated. About 12 kg of crude poly-γ-glutamic acid fraction was dissolved in 120 liters of diluted aqueous sodium hydroxide solution and a solution (pH 4.0) was subjected to decoloring with activated charcoal and then to desalting by ultrafiltration, and neutralized with diluted aqueous sodium hydroxide solution. The solution was spray-dried to obtain 2.5 kg poly-γ-glutamic acid as the sodium salt. The molecular weight of the obtained poly-γ-glutamic acid was measured with a low angle laser light scattering meter (LALLS : Tosoh LS8000) and found to be 520,000.

Example 2

[Preparation of degradated products of poly-γ-glutamic acid]

The poly-γ-glutamic acid prepared in Example 1 was dissolved in water to a concentration of 2 mg/ml, and the solution was adjusted to pH 1 with hydrochloric acid, and then heated at 50 °C for 30 minutes or at 70 °C for a hour. After heating, the respective solutions were cooled to room temperature and neutralized with aqueous sodium hydroxide solution, dialysed against water and spray-dried. The molecular weights of the resulting poly-γ-glutamic acid degradated products were measured by LALLS, and found to be 300,000, 10,000 respectively.

The present invention is further illustrated in details by the following Examples using the poly-γ-glutamic acid prepared in Examples 1 and 2.

Example 3

[Preparation of dog food]

| Corn | 30% by weight |
|---|---|
| Flour | 35 |
| Soybean cake | 20 |
| Deffated rice bran | 5 |
| Meat bone meal | 5 |
| Chicken processing by-product | 3 |
| Vitamin mix [*1)] | 0.5 |
| Mineral mix [*2)] | 0.5 |
| Poly-γ-glutamic acid | 1 |
| (average molecular weight of 300,000) | |

Note:
*1) Vitamin mix is composed of vitamin A, vitamin D, vitamin E, vitamin K, thiamin, riboflavin, pantothenic acid, niacin, vitamin $B_6$, choline, vitamin $B_{12}$, biotin, folic acid.
*2) Mineral mix is composed of calcium, phosphorus, sodium, chloride, potassium, magnesium, iron, zinc, manganese, copper, iodine, selenium.

The components shown in the above was mixed, pulverlized, and screened. The even-sized powder was kneaded with water so as to become 27 % by weight and extruded with a extruder. The expanded material extruded was dried at 120 °C for 20 minutes with a drier, and then soybean oil was sprayed thereon so as to become 5 % by weight. The calcium content of the prepared dog food was 1. 0 % by weight.

Example 4

[Preparation of feed composition for pig]

The components shown below were blended to prepare feed composition for a young pig.

| Corn | 50% by weight |
|---|---|
| Milo | 23 |
| Barley | 13 |
| Soybean cake | 16 |
| Rapeseed cake | 4 |
| Fish meal | 2 |
| Rice bran | 2.6 |
| Sodium chloride | 0.3 |
| Mineral mix [*1)] | 0.1 |
| Vitamin mix [*2)] | 0.1 |
| Calcium phosphate | 0.8 |
| Calcium carbonate | 0.8 |
| Poly-$\gamma$-glutamic acid | 0.3 |
| (average molecular weight of 10,000) | |

Note:
*1) and *2) : see Example 3

The calcium content in the feed composition for a young pig was 0.55 % by weight.

Example 5

[Preparation of feed composition for eel]

The components show below were blended to prepare feed composition for eel.

| Fish meal | 64% by weight |
|---|---|
| $\alpha$-Potate starch | 22 |
| Flour gluten | 2 |
| Soybean cake | 6 |
| Vitamin mix [*1)] | 1 |
| Coline chloride | 0.3 |
| Mineral mix [*2)] | 2.4 |
| Calcium carbonate | 2 |
| Ferrous sulfate | 0.1 |
| Poly-$\gamma$-glutamic acid | 0.2 |
| (average molecular weight of 520,000) | |

Note:
*1) and *2) : see Example 3

The calcium content in the feed composition for eel was 8.3 % by weight.

Example 6

[Preparation of feed composition for egg-producing chicken]

The components shown below were blended to prepare feed composition for egg-producing chicken.

| Corn | 50% by weight |
|---|---|
| Milo | 11 |
| Soybean cake | 14 |
| Fish meal | 3 |
| Corn gluten meal | 2 |
| Rapeseed cake | 2 |
| Meat bone meal | 4 |
| Rice bran | 7.3 |
| Sodium chloride | 0.3 |
| Animal fat | 2.0 |
| Mineral mix [*1)] | 0.1 |
| Vitamin mix [*2)] | 0.1 |
| Calcium carbonate | 3.5 |
| Calcium phosphate | 0.5 |
| Poly-$\gamma$-glutamic acid | 0.2 |
| (an average molecular weight of 10,000) | |

Note:
*1) and *2) see Example 3

6

The calcium content in the feed composition for egg-producing chicken was 3.4 % by weight.

Example 7

[Preparation of feed composition for chicks]

The components shown below were blended to prepare feed composition for chicks.

| Corn | 50% by weight |
|---|---|
| Milo | 14 |
| Soybean cake | 23 |
| Fish meal | 4.8 |
| Rapeseed cake | 3 |
| Meat bone meal | 2 |
| Sodium chloride | 0.3 |
| Animal fat | 1.0 |
| Mineral mix [*1)] | 0.1 |
| Vitamin mix [*2)] | 0.1 |
| Calcium carbonate | 0.5 |
| Calcium phosphate | 1.0 |
| Poly-$\gamma$-glutamic acid | 0.2 |
| (an average molecular weight of 10,000) | |

Note:
∗1) and ∗2) : see Example 3

The calcium content in the feed composition for chicks was 0.9 % by weight.

Example 8

[The breeding test of the feed composition to egg-producing chickens]

One hundred egg-producing chickens of 450 days old were divided into 2 groups, i.e. treatment group and control group, each of which consisted of 50 chickens. The treatment group was fed with the feed composition prepared in Example 6 for 20 days. The control group was fed in the same manner as the treatment group with control feed composition not blended with poly-$\gamma$-glutamic acid. The eggshell strength of the eggs produced in the five days before ending the test was measured, and compared with those produced in the five days before starting test. The resuls are shown in Table 1.

Table 1

| Feed Composition | Eggshell Strength (kg) | |
|---|---|---|
| | Before starting the Test | Before ending the Test |
| Control | 3.38±0.08 (100) | 2.90±0.08 (86[#]) |
| Example 6 | 3.29±0.07 (100) | 3.15 ±0.09* (96) |
| MEAN± SEM | | |

* indicates P<0.01 vs. Control
# The numerial value in parenthesis indicates relative value calculated as the eggshell strength measured before test rendered 100

Example 9

[The breeding test of the feed composition to chicks]

Thirty chicks of 0 day old were divided into 2 groups each consisted of 15 chicks. One group was fed with the feed composition prepared in Example 7, and the other group was fed with the control feed composition not blended with poly-$\gamma$-glutamic acid. Both groups were fed for 10 days.

The thighbone weight and the calcium content (%) in the thighbone were measured. The results are summarized in Table 2.

Table 2

| Feed Composition | Thighbone Weight (g) | Ca Content in Thighbone (%) |
|---|---|---|
| Control | 0.617±0.014 | 5.36±0.12 |
| Example 7 | 0.659±0.015 * | 5.73±0.13 * |
| MEAN± SEM | | |

* indicates P< 0.05 vs. Control

Example 10

[The breeding test of the feed composition to rats]

Eighteen just-weaning male Wistar rats (body weight of about 50 g) were divided into 3 groups each consisted of 6 rats. Each group was fed for 4 weeks with the feed composition containing 0.35 % of calcium and 0.7 % of phosphorous ad libitum.

The feed composition used for each group: Standard feed containig 20 % of soybean protein was used for Group 1. Poly-$\gamma$-glutamic acid (average molecular weight of 520,000 ; Example 1) was added to the standard feed so as to become 2 % for Group 2. Poly-$\gamma$-glutamic acid (an average molecular weight of 10,000; Example 2) was added to the standard feed so as to become 2 % for Group 3. The excreted feces and urine were collected for the last 4 days before each end of the second and forth weeks of the feeding period to calculate calcium retention rate according to the following equation:

The calcium retention rate = [1 - (Ca Amount in the Excreted Feces + Ca Amount in the Excreted Urine) / Ca Amount Intake] × 100.

The thighbone was excised at the last day of the feeding period and the calcium content (%) in thighbone was measured. The results are shown in Figure 1 and Table 3.

Table 3

| Feed Group | Ca content in Thighbone (%) |
|---|---|
| Group 1 | 20.7±0.7 |
| Group 2 | 21.4±0.4 |
| Group 3 | 22.1±0.4 |
| MEAN± SEM | |

It was confirmed by Examples 8, 9 and 10 that poly-γ-glutamic acid has effects of accelerating absorption of calcium in the intestinal tract and the formation of bone.

Example 11

[The feed composition for broiler chicks for the preliminary stage]

The components shown below were blended to prepare the feed composition for broiler chicks for the preliminary stage.

| | |
|---|---|
| Corn | 54.6% by weight |
| Soybean cake | 32 |
| Fish meal | 2 |
| Meat bone meal | 2 |
| Animal fat | 5 |
| Calcium carbonate | 0.5 |
| Calcium phosphate | 0.2 |
| Sodium chloride | 0.2 |
| Vitamin mix [1] | 0.1 |
| Mineral mix [2] | 0.1 |
| L-Lysine hydrochloride | 0.1 |
| DL-Methionine | 0.1 |
| Poly-γ-glutamic acid | 0.2 |
| (average molecular weight of 300,000) | |

Note:
∗1) and ∗2) : see Example 3

The calcium content in the feed composition for the broiler chicks for the preliminary stage was 0.95 % by weight.

Example 12

[The feeding test of the feed composition to broiler chicks]

One hundred and eighty male broiler chicks of 7 days old were divided into 2 groups, each consisted of 90 broiler chicks. One group was fed for 14 days with the feed composition prepared in Example 11. The other group was fed for 14 days with the control feed composition not blended with poly-γ-glutamic acid. Thereafter, both groups were fed with commercial feed containing no poly-γ-glutamic acid up to 55 days old. At the end of the feeding period, the body weight, feed requirement, length of the crural bone, carcass yield and the abdominal fat were measured. The results are shown in Table 4.

Table 4

| Feed omposition | Body Weight of 55 Days Old (g) | Feed Requirement | Length of the Crural Bone (cm) | Yield of the Breast Meat [A] (%) | Yield of Thigh Meat [B] (%) | Carcass yield [A] + [B] (%) | Abdominal fat (%) |
|---|---|---|---|---|---|---|---|
| Control | 3.353 | 1.946 | 12.5 | 17.55 | 21.83 | 39.38 (100) | 3.6 (100) |
| Example 11 | 3.400 | 1.923 | 12.8* | 17.80 | 22.49 | 40.29[#] (102.3) | 2.8[#] (77.8) |

* indicates P < 0.05 vs. the Control
# indicates relative value calcurated as the control was rendered 100.

It is apparent from the feeding results shown in Table 4 that poly-$\gamma$-glutamic acid promotes the formation of bone, especially the crural bone significantly, and causes an effect of reducing body fat as well as the increased carcass yield.

INDUSTRIAL APPLICABILITY

The present invention relates to a feed composition containing poly-$\gamma$-glutamic acid as a substance to accelerate mineral adsorption and further as a substance to reduce body fat accumulation. When the feed composition is fed to livestock, poultry or pets, the absorption of minerals in the intestinal tract is increased, thus causing effects to prevent the formation of weak or deformed legs in livestock and poultry, to prevent the lowering of egg-shell strength in egg-producing chickens, to prevent bone curvature in eel, and to prevent bone diseases such as osteomalacia and osteoporosis in pets. In addition to the effect of increasing mineral absorption, effects of reducing body fat and increased carcass yield in broiler chicks are expected.

**Claims**

1. A feed composition containing poly-$\gamma$-glutamic acid and/or degradated product thereof.

2. A feed composition for increasing eggshell strength and reducing body fat which contains poly-$\gamma$-glutamic acid and/or degradation product thereof.

3. A feed composition as claimed in claim 1 or 2 wherein a part or all of life-essential minerals such as calcium, iron, magnesium and the like are enriched.

4. A method for feeding animals such as livestock, poultry, fish, pets and the like which comprises feeding animals with a feed composition containing poly-$\gamma$-glutamic acid and/or degradated product thereof.

5. A method as claimed in Claim 4 wherein said feed composition contains 0.01 to 3 % by weight of poly-$\gamma$-glutamic acid and 0.01 to 30 % by weight of calcium.

6. A method as claimed in Claim 4 or 5 wherein an average molecular weight of said poly-$\gamma$-glutamic acid lies in the range of from 1,000 to 3,000,000.

7. A method as claimed in Claim 4, 5 or 6 wherein said animals are egg-producing chickens or broiler chicks.

## *Fig. 1*

### Ca retention rate

Legend:
- ☐ Group 1
- ▨ Group 2
- ▧ Group 3

MEAN± SEM

*: P<0.05 vs. Group 1

## INTERNATIONAL SEARCH REPORT

| International application No. |
| --- |
| PCT/JP96/01242 |

**A.  CLASSIFICATION OF SUBJECT MATTER**

Int. Cl$^6$  A23K1/16, A23K1/18

According to International Patent Classification (IPC) or to both national classification and IPC

**B.  FIELDS SEARCHED**

Minimum documentation searched (classification system followed by classification symbols)

Int. Cl$^6$  A23K1/00-1/20

Documentation searched other than minimum documentation to the extent that such documents are included in the fields searched

| | |
| --- | --- |
| Jitsuyo Shinan Koho | 1933 - 1996 |
| Kokai Jitsuyo Shinan Koho | 1972 - 1996 |

Electronic data base consulted during the international search (name of data base and, where practicable, search terms used)

JOIS

**C.  DOCUMENTS CONSIDERED TO BE RELEVANT**

| Category* | Citation of document, with indication, where appropriate, of the relevant passages | Relevant to claim No. |
| --- | --- | --- |
| X | JP, 5-316999, A (Ajinomoto Co., Inc.), December 3, 1993 (03. 12. 93)(Family: none) | 1 - 7 |
| A | JP, 3-47087, A (Ajinomoto Co., Inc.), February 28, 1991 (28. 02. 91)(Family: none) | 1 - 7 |

☐ Further documents are listed in the continuation of Box C.  ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| July 23, 1996 (23. 07. 96) | July 30, 1996 (30. 07. 96) |

| Name and mailing address of the ISA/ | Authorized officer |
| --- | --- |
| Japanese Patent Office | |
| Facsimile No. | Telephone No. |

Form PCT/ISA/210 (second sheet) (July 1992)